# EUROPÄISCHE PATENTANMELDUNG

(11) **EP 0 524 538 A1**
(43) Veröffentlichungstag der Anmeldung: **27.01.1993**
(21) Anmeldenummer: 92112046.5
(22) Anmeldetag: 15.07.1992
(51) Int. Cl.: B65G 21/06, B65G 17/24

(54) **Tragholm für eine Staurollenförderkette**

(30) Priorität: 26.07.1991 DE 9109252 U
(71) Anmelder: Burkhardt, Volker, D-86655 Harburg (DE)
(72) Erfinder: Burkhardt, Volker, D-86655 Harburg (DE)
(74) Vertreter: Lorenz, Werner, Dipl.-Ing.

(57) **Zusammenfassung**

Ein Tragholm für eine Staurollenförderkette weist ein im wesentlichen geschlossenes, mit einem oberen Längsschlitz versehenes kasten- bzw. wannenförmiges Strangpreßprofil (1) auf, dessen Seitenwände (2,3) durch wenigstens einen Quersteg miteinander verbunden sind. Das Strangpreßprofil (1) ist mit Laufbahnen für die endlos umlaufende Förderkette (8) versehen, deren Förderrollen (7) zwischen Laufrollen (9) relativ drehbar angeordnet sind. Das Strangpreßprofil (1) ist auf der Unterseite soweit geöffnet, daß die Förderkette (8) aus dem Strangpreßprofil (1) nach unten herausführbar ist. Im unteren Bereich ist zwischen den beiden Seitenwänden (2,3) eine in Längsrichtung des Strangpreßprofiles (1) verlaufende Schiene (15) für die Rücklaufbahnen der Förderkette (8) angeordnet.

## Beschreibung

Die Erfindung betrifft einen Tragholm für eine Staurollenförderkette, der ein im wesentlichen geschlossenes, mit einem oberen Längsschlitz versehenes kasten- bzw. wannenförmigen Strangpreßprofil aufweist, dessen Seitenwände durch wenigstens einen Quersteg miteinander verbunden sind, wobei das Stangpreßprofil mit Laufbahnen für die endlos umlaufende Förderkette versehen ist, deren Förderrollen zwischen Laufrollen relativ drehbar angeordnet sind.

Ein Tragholm dieser Art ist Z. B. in der DE-PS 31 48 177 beschrieben. Dabei besteht das Aluminium-Strangpreßprofil aus zwei Seitenwänden und einem Quersteg auf der Unterseite, der die beiden Seitenwände miteinander verbindet und der gleichzeitig auch die Rücklaufbahn für die Förderkette bildet. Auf der Oberseite sind die beiden Seitenwände innenseitig mit einer breiteren Auflage versehen, die die Laufbahnen für die Laufrollen der Förderkette bilden. Die beiden Seitenwände sind auf der Oberseite Jedoch innerseitig nur soweit einander angenähert, daß ein Längsschlitz mit einer derartigen Breite bleibt, daß die Förderrollen ungehindert durchlaufen können. Durch an den Wänden vorgesehene Befestigungsnuten können Zubehör- und Anbauteile befestigt werden.

Das vorbekannte Tragholmprofil ist zwar relativ einfach und stabil aufgebaut und auch sehr universell einsetzbar, aber es ist noch weiter verbesserungsfähig. So ist es z. B. erforderlich, den Quersteg des Tragholmes mit Aussparungen zu versehen, durch die die Förderkette für eine Antriebsverbindung und/oder zum Spannen aus dem Tragholm herausgeführt wird. Auf der Oberseite liegt ja das zu transportierende Werkstück, so daß die Antriebsverbindung "irgendwo" auf der Strecke erfolgen muß, da ein Antrieb am Anfang oder Ende im allgemeinen ebenfalls nicht üblich ist. Dies bedeutet, daß die Förderkette an irgendeiner Stelle aus dem Profil herausgeführt werden miß, wonach sie über ein oder mehrere Rollen geführt und über ein Kettenrad angetrieben wird. Anschließend wird die Förderkette wieder in das Profil Zurückgeführt. Gleiches gilt auch für ein Spannen der Förderkette durch Spannrollen.

Bei dem vorbekannten Tragholmen mußte deshalb zu diesem Zwecke eine gesonderte Ausfräsung in dem Quersteg vorgenommen werden, wozu das Profil von mehreren Metern Länge, bis zu acht Meter und mehr, in aufwendiger Weise auf eine Bearbeitungsmaschine gebracht werden mußte. Waren dabei nachträgliche Umbauten oder Abänderungen erforderlich, die eine Verlegung des Antriebes zur Folge hatten, so mußte der Bearbeitungsvorgang erneut vorgenommen werden.

Der vorliegenden Erfindung liegt daher die Aufgabe zugrunde, die vorstehend genannten Nachteile zu vermeiden, insbesondere ein Tragholmprofil zu schaffen, bei dem der Antrieb für die Förderkette ohne großen Aufwand vorgenommen werden kann, wobei im Bedarfsfalle auch nachträgliche Änderungen ohne großen Aufwand möglich sein sollen.

Erfindungsgemäß wird diese Aufgabe dadurch gelöst, daß das Strangpreßprofil auf der Unterseite soweit geöffnet ist, daß die Förderkette aus dem Strangpreßprofil nach unten herausführbar ist, und daß im unteren Bereich zwischen den beiden Seitenwänden eine in Längsrichtung des Strangpreßprofiles verlaufende Schiene für die Rücklaufbahnen der Förderkette angeordnet ist.

Durch die erfindungsgemäße Schiene in Verbindung mit der Öffnung des Strangpreßprofiles auf der Unterseite kann die Förderkette an einer beliebigen gewünschten Stelle aus dem Strangpreßprofil nach unten herausgezogen werden. Hierzu wird lediglich aus der Schiene (aus Kunststoff extrudiert oder gefräßt) ein Stück herausgesägt und die verbleibenden zwei Schienen so angeordnet, daß eine Lücke bleibt, durch die die Kette unten aus dem Strangpreßprofil herausgeführt werden kann. Die Schiene ist so ausgebildet, daß sie mittels eines Werkzeuges (Hebel) nach unten demontiert werden kann. Die Schiene kann in einer montierten Förderanlage, wenn ein Herausschieben nicht mehr möglich ist, nach unten demontiert werden. Der Einbau erfolgt von unten durch leichte Schläge mit der Hand, einem Kunststoffhammer oder ähnlichem, bis die Schiene im Tragholm wieder einrastet. Irgendwelche mechanische Bearbeitungen sind jedoch im allgemeinen nicht erforderlich.

Ein weiterer Vorteil der erfindungsgemäßen Ausgestaltung des Tragholmes besteht auch darin, daß problemlos nachträglich Lageänderungen der Antriebseinrichtungen vorgenommen werden können. Hierzu ist es ebenfalls lediglich erforderlich, die Schiene entsprechend auszuhebeln, ein entsprechendes Stück herauszusägen und wieder von unten einzubauen.

Zur Verbindung der beiden Seitenteile miteinander und zur Stabilisierung des Strangpreßprofiles ist es lediglich erforderlich wenigstens einen Quersteg in einem entsprechendem Abstand über der Schiene vorzusehen.

In einfacher Weise kann die Schiene in an der Innenseite der Seitenwände angeordneten Nuten eingesetzt sein.

Durch diese Ausgestaltung läßt sich die Schiene ohne großen Aufwand mit einfachen Mitteln in das Strangpreßprofil einschieben oder von unten her einrasten und positionieren und bei Bedarf auch wieder entfernen.

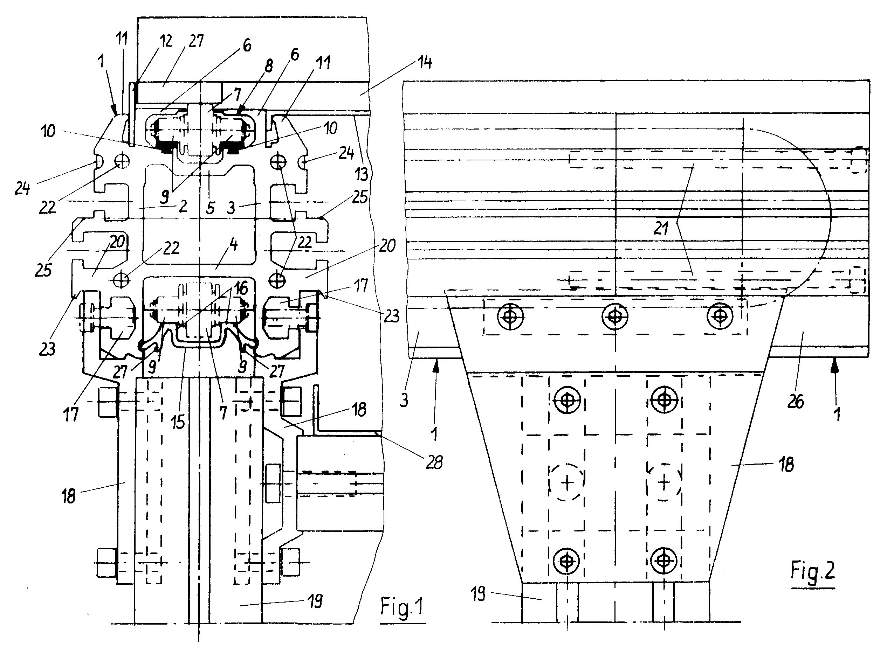

Eine einfache und kostengünstige Ausgestaltung für die Schiene kann, wie in Fig. 1 dargestellt, ausgebildet sein. Das Schienenprofil ist so ausgeführt, daß die beiden Schenkel federnd sind und die Gesamtbreite über die Schenkel etwas größer ist als das Nutenmaß. Dadurch hat die Schiene im eingebauten Zustand eine Vorspannung und sitzt fest im Profil. Dies bedeutet, daß vertikal ist ein Formschluß und horizontal längs ein Reibschluß vorhanden ist.

Zur Stabilisierung und gegebenenfalls auch zur Verbindung von Tragholmteilen miteinander können an den Seitenwänden Stützenprofile befestigt sein, die gleichzeitig auch Laschenverbindungen bilden können.

Zur Kraftübertragung und zur Abstützung kann dabei vorgesehen sein, daß die Stützenprofile an seitlich aus den Seitenwänden rechtwinklig dazu herausragenden Auflagen abgestützt sind.

Zur Verbindung von mehreren Tragholmteilstücken miteinander zur Bildung einer entsprechend langen Bahn kann vorgesehen sein, daß mehrere Tragholmteilstücke durch selbstschneidende oder gewindeformende Schrauben, die in Bohrungen in den Seitenwänden des Strangpreßprofil eingeschraubt sind, miteinander verbindbar sind.

In vorteilhafter Weise wird man auch an den Seitenwänden an entsprechend herausragenden Profilteilen nach unten ragende Tropfkanten vorsehen, um Flüssigkeiten wie Schmieröle, Schneidöle, Treibstoffe, Emulsionen usw., die z.B. beim Transport von Maschine zu Maschine ausgetragen werden oder bei der Montage anfallen, gezielt in dafür vorgesehene Tropfwannen abführen zu können.

Für eine Seitenführung der zu transportierenden Teile kann vorgesehen sein, daß das Strangpreßprofil auf der Oberseite mit einer aus dieser nach oben herausragenden Seitenführungsleiste für die zu transportierenden Teile versehen ist.

Die Seitenführungsleiste kann in beliebiger Weise mit dem Tragholm, z.B. durch einen Klemmsitz oder durch eine formschlüssige Verbindung über nasenartige Vorsprünge, die mit Einbuchtungen, Einkerbungen oder dergleichen zusammenarbeiten, verbunden werden.

Wenn am Tragholm außen in die obere Nut und auf die Absätze ein Abdeckblech oder besondere Führungsleisten angeschraubt werden müssen und für eine Dichtheit gesorgt werden muß, wird einfach in die vorgesehene Halbrundnut und zwischen die anzuschraubende Leiste eine Dichtschnur gelegt. Beim Anschrauben wird die Dichtschnur zusammengedrückt und dadurch eine sichere Abdichtung erreicht.

Die oberen Laufbahnen für die endlos umlaufenden Laufrollen der Förderkette können durch entsprechend in einen oberen Quersteg eingeformte Laufbahnen oder durch gesonderte Kettenlaufleisten gebildet werden. Die Verwendung von Kettenlaufleisten hat den Vorteil, daß man das Material der Kettenlaufleiste in Verbindung mit den Laufrollen optimal für die entsprechende Tragfähigkeit und geringe Reibung auslegen kann, und daß Verschleißteile wie z.B. Kettenlaufleisten, problemlos ausgewechselt werden können.

Gesonderte Kettenlaufleisten können in beliebiger Weise mit dem Strangpreßprofil verbunden sein, wie z.B. über Schwalbenschwanz- oder T-Nuten, womit sowohl eine einfache Montage als auch die Demontage bei einem festen Sitz möglich ist.

Als Transporthilfe für transportierende Teile, insbesondere für Kleinteile, kann vorgesehen sein, daß auf das Strangpreßprofil ein Werkstückträger mit einer Laufleiste in Bereich der Förderrollen aufsetzbar ist.

Zur Umlenkung der endlos umlaufenden Förderkette können kurze Profilstücke dienen, die entsprechend an den Tragholmstücken befestigt werden.

Nachfolgend ist ein Ausführungsbeispiel der Erfindung anhand der Zeichnung prinzipmäßig beschrieben.

Es zeigt:
- Fig. 1: einen Vertikalschnitt durch das erfindungsgegemäße Tragholmprofil.
- Fig. 2: ausschnittsweise eine Seitenansicht des Tragholms nach der Fig. 1.

Der Tragholm ist aus einem Strangpreßprofil 1 gebildet, das zwei Seitenwände 2 und 3, einen unteren Quersteg 4 und einen oberen Quersteg 5 als Hauptbestandteile aufweist. Von den beiden Seitenwänden 2 und 3 aus ragen noch Abdeckungen 6 nach oben, die auf der Oberseite mit nach innen gerichteten horizontalen Teilen versehen sind, die zwischen sich lediglich einen Spalt von einer Breite freilassen, der im wesentlichen der Breite von Förderrollen 7 einer Förderkette 8 entspricht. Die Förderkette 8 besitzt beidseits der Förderrollen 7 in bekannter Weise Laufrollen 9, die auf Kettenlaufleisten 10 rollen. Die Kettenlaufleisten 10 besitzen im Querschnitt gesehen eine Schwalbenschwanzform, mit der sie in entsprechenden Aussparungen des oberen Quersteges 5 eingesetzt sind.

Im oberen Bereich sind die beiden Seitenwände 2 und 3 noch mit seitlichen Anbauten versehen, die auf der Oberseite nasenartige nach innen ragende Vorsprünge 11 besitzen. Zwischen den nasenartigen Vorsprüngen 11 und den Abdeckungen 6 verbleibt jeweils ein vertikaler Spalt. In den äußeren Spalt ist eine Seitenführungsleiste 12 in Form eines Federbandstahles eingeklemmt. Die Klemmwirkung wird auf einfache Weise durch die Elastizität des nasenartigen Vorsprunges 11 erreicht, wozu es lediglich erforderlich ist, den Spalt geringfügig schmäler auszuführen als die Dicke der Seitenführungsleiste 12. Auf diese Weise wird die Seitenführungsleiste 12 von oben her in den Spalt eingeklemmt.

Auf der gegenüberliegenden Seite kann der Spalt zwischen dem nasenartigen Vorsprung 11 und der Abdeckung 6 zur Aufnahme eines abgekanteten Abdeckbleches 13 dienen, die den Zwischenraum zwischen zwei auf Abstand und parallel nebeneinander angeordneten Tragholme überbrückt, auf denen entsprechend durch die Förderrollen 7 bewegte Werkstücke oder ein Werkstückträger 14 mit einer Laufleiste 27 rollen.

Unter dem unteren Quersteg 4 ist das Strangpreßprofil 1 zwischen den beiden Seitenwänden 2 und 3 offen. Wie aus der Figur 1 ersichtlich ist, sind die beiden Seitenwände 2 und 3 im unteren Bereich jeweils mit einer sich über die gesamte Länge des Strangpreßprofiles 1 erstreckenden Nut versehen. In die beiden innenseitig in den Seitenwänden 2 und 3 angeordneten Nuten ist eine Brücke in Form einer Schiene 15 eingeschoben bzw. eingerastet. In der Schiene sind auf Abstand voneinander angeordnete und parallel zu der Längsrichtung des Strangpreßprofiles 1 verlaufende und höher liegende Laufbahnen 16 für die Laufrollen 9 in dessen Rücklaufbereich integriert. Zum nachträglichen Ausbau der Schiene aus dem Strangpreßprofil sind beidseitig Nasen 27 angeordnet, um mittels eines Hebelwerkzeuges die Schiene aus dem Tragholm nach unten ausbauen zu können, wenn ein Verschieben nicht möglich ist. Die Schiene 15 mit den Laufbahnen 16 und Nasen 27 kann aus einem reibungsarmen Kunststoff gebildet sein.

Im unteren Bereich sind in den beiden Seitenwänden 2 und 3 zur Außenseite hin offene Befestigungsnuten 17 vorgesehen, in denen über Schrauben Stützenprofile 18 befestigt werden.

Über die Stützenprofile 18 kann der Tragholm z.B. auf Trägern 19 befestigt werden. Die Abstützung an dem Strangpreßprofil 1 erfolgt dabei an aus den beiden Seitenwänden rechtwinklig bzw. horizontal herausragenden Auflagen 20. Die Auflagen 20 können dabei wiederum Teile von Befestigungsnuten für Anbauteile sein. Ebenso können im Bedarfsfalle auch noch weitere Befestigungsnuten in bekannter Weise in den Seitenwänden 2 und 3 angeordnet sein.

Wie insbesondere aus Figur 2 ersichtlich ist, können die Stützenprofile 18 gleichzeitig auch in Verbindung mit Schrauben eine Art Laschenverbindung für zwei stumpf aneinander stoßende Tragholmstücke bilden. Zusätzlich können die Tragholmstücke auch durch selbstschneidende oder gewindeformende Schrauben 21, die in entsprechende Bohrungen 22 in den Seitenwänden 2 und 3 eingeschraubt oder eingesteckt sind, miteinander verbunden werden.

Die seitlich aus den Seitenwänden herausragenden Auflagen 20 können außenseitig auch noch mit nach unten ragenden Tropfkanten 23 versehen sein. Selbstverständlich können die Tropfkanten jedoch auch durch andere, seitlich aus den Seitenwänden 2 und 3 herausragende Vorsprünge gebildet sein. Unter den Tropfkanten sind Tropfwannen 28 so angeordnet, daß die Tropfkanten innerhalb der Tropfwannen liegen.

Die beiden Seitenwände 2 und 3 sind im oberen Bereich außenseitig jeweils mit einer Halbrundnut 24 versehen. Die Halbrundnut 24 kann im Zusammenwirken mit einem längs angeschraubten Abdeckblech, -leiste oder ähnlichem zur Aufnahme einer Dichtschnur dienen, wenn eine Abdichtung in diesem Bereich gewünscht oder erforderlich ist.

Die beiden Seitenwände 2 und 3 können auch mit ein oder mehreren Absätzen 25 zur Aufnahme von Anschraubteilen, Leisten, Halterungen, Abdeckungen oder dgl. versehen sein. Hierzu sind die Absätze im allgemeinen mit horizontalen Auflageflächen versehen.

Wie aus der Figur 2 ersichtlich ist, wird die Umlenkung der Förderkette 8 jeweils an einer Umlenkstation in Form eines kurzen Profilstückes 26 vorgenommen. Als Mindestausstattung für einen Tragholm sind somit wenigstens ein Mittelstück und zwei Umlenkstationen notwendig. Das Mittelstück kann beliebig lang sein und gegebenenfalls aus mehreren Teilstücken bestehen.

Statt einer Klemmverbindung der Seitenführungsleiste 12 kann diese Verbindung auch in einem Formschluß erfolgen. Hierzu kann der nasenartige Vorsprung 11 auch in entsprechende Einkerbungen, Einbuchtungen, Mulden oder dgl. in der Seitenführungsleiste eingreifen (nicht dargestellt).

Wie ersichtlich kann die Förderkette 8, die auf der Schiene 15 mit ihren Laufbahnen 16 und Nasen 27 im unteren Bereich des Tragholmes innenseitig zwischen den beiden Seitenwänden 2 und 3 zurückläuft an einer beliebigen Stelle aus der unteren Öffnung des Strangpreßprofiles herausgezogen werden, um eine Antriebsverbindung zu schaffen. Hierzu ist es lediglich erforderlich, daß man an der gewünschten Stelle ein Stück aus der Schiene 15 heraussägt, daß man die Schiene 15 so zweiteilig ausbildet und die beiden Seitenteile entsprechend jeweils von der Seite her bis zu dem Antriebsbereich in die Nuten der beiden Seitenwände 2 und 3 einschiebt oder von unten einbaut und einrastet. Die beiden Schienen werden dabei jedoch lediglich soweit einander angenähert, daß zwischen ihnen ein entsprechender Freiraum zum Herausführen der Förderkette und zu dessen Verbindung mit einer Antriebseinrichtung und anschließender Rückführung in das Innere des Strangpreßprofiles 1 verbleibt.

Für einen einwandfreien Lauf ist es selbstverständlich erforderlich, daß der untere Quersteg 4 in einem derartigen Abstand über der Schiene 15 mit ihren erhöhten Laufbahnen 16 angeordnet ist, daß die Laufrollen 9 und die Förderrollen 7 frei durchlaufen können.

## Patentansprüche

1. Tragholm für eine Staurollenförderkette, der ein im wesentlichen geschlossenes, mit einem oberen Längsschlitz versehenes kasten- bzw. wannenförmigen Strangpreßprofil aufweist, dessen Seitenwände durch wenigstens einen Quersteg miteinander verbunden sind, wobei das Strangpreßprofil mit Laufbahnen für die endlos umlaufende Förderkette versehen ist, deren Förderrollen zwischen Laufrollen relativ drehbar angeordnet sind,
**dadurch gekennzeichnet,** daß das Strangpreßprofil (1) auf der Unterseite soweit geöffnet ist, daß die Förderkette (8) aus dem Strangpreßprofil (1) nach unten herausführbar ist, und daß im unteren Bereich zwischen den beiden Seitenwänden (2, 3) eine in Längsrichtung des Strangpreßprofiles (1), verlaufende Schiene (15), für die Rücklaufbahnen der Förderkette (8) angeordnet ist.

2. Tragholm nach Anspruch 1,
**dadurch gekennzeichnet,** daß die Schiene (15) in an der Innenseite der Seitenwände (2, 3) angeordnete Nuten eingesetzt ist.

3. Tragholm nach Anspruch 1 oder 2,
**dadurch gekennzeichnet,** daß die Schiene (15) zwei Nasen (27) und zwei höher liegenden Laufbahnen (16) aufweist, die einen derartigen Abstand voneinander besitzen, daß die Förderrollen (7) frei dazwischen durchlaufen.

4. Tragholm nach einem der Ansprüche 1 bis 3,
**dadurch gekennzeichnet,** daß im unteren Bereich außenseitig an den Seitenwänden (2, 3) Stützenprofile (18) befestigt sind.

5. Tragholm nach Anspruch 4,
**dadurch gekennzeichnet,** daß die Stützenprofile (18) an seitlich aus den Seitenwänden (2, 3) rechtwinklig dazu herausragenden Auflagen (20) abgestützt sind.

6. Tragholm nach einem der Ansprüche 1 bis 5,
**dadurch gekennzeichnet,** daß mehrere Tragholmteilstücke (1) durch selbstschneidende oder gewindeformende Schrauben (21), die in Bohrungen (22) in den Seitenwänden (2, 3) des Strangpreßprofil (1) eingeschraubt sind, miteinander verbindbar sind.

7. Tragholmprofil nach einem der Ansprüche 1 bis 6,
**dadurch gekennzeichnet,** daß das Strangpreßprofil (1) auf der Oberseite mit einer aus dieser nach oben herausragenden Seitenführungsleiste (12) für die zu transportierenden Teile versehen ist, die in einem nach oben offenen Längsschlitz eingeklemmt ist.

8. Tragholm nach Anspruch 7,
**dadurch gekennzeichnet,** daß der Längsschlitz durch die seitliche Kettenabdeckung (6) und einer äußeren nasenartigen Leiste (11) des Strangpreßprofiles (1) gebildet ist.

9. Tragholm nach einem der Ansprüche 1 bis 8,
**dadurch gekennzeichnet**, daß wenigstens in einer der beiden Seitenwände (2, 3) in deren oberen Bereich außenseitig eine Halbrundnut (24) eingeformt ist, die zur Aufnahme einer Dichtschnur vorgesehen ist.

10. Tragholm nach einem der Ansprüche 1 bis 9,
**dadurch gekennzeichnet,** daß die oberen Laufbahnen für die endlos umlaufenden Laufrollen (9) der Förderkette (8) durch Kettenlaufleisten (10) gebildet sind.

11. Tragholm nach Anspruch 10, **dadurch gekennzeichnet,** daß
die Kettenlaufleisten (10) in Schwalbenschwanz- oder T-Nuten des Strangpreßprofiles (1), eingesetzt sind.

12. Tragholm nach einem der Ansprüche 1 bis 11,
**dadurch gekennzeichnet,** daß er aus mindestens einem Mittelstück und je einer Umlenkstation an beiden Enden zusammengesetzt ist.

13. Tragholm nach einem der Ansprüche 1 bis 12,
**dadurch gekennzeichnet,** daß der Quersteg (4) auf Abstand über der Schiene (15) angeordnet ist und gegebenenfalls zusätzlich im oberen Bereich des Strangpreßprofiles (1) ein zweiter Quersteg (5) zwischen den Seitenwänden (23) angeordnet ist.

14. Tragholm nach Anspruch 13,
**dadurch gekennzeichnet,** daß auf dem zweiten Quersteg (5) die oberen Laufbahnen (10) der Förderkette (8) angeordnet sind.
